# EUROPEAN PATENT APPLICATION

(11) **EP 3 973 785 A1**
(43) Date of publication of application: **30.03.2022**
(21) Application number: 21198632.8
(22) Date of filing: 23.09.2021
(51) Int. Cl.: A23J 1/00, A23J 3/14

(54) **METHOD, EXTRACTION SYSTEM, AND USE OF SAID SYSTEM FOR EXTRACTING PROTEINS FROM LEAF JUICE**

(30) Priority: 23.09.2020 NL 2026526
(71) Applicant: Grassa B.V., 5928 SZ Venlo (NL)
(72) Inventor: Koopmans, Sybrandus, 5928 SZ Venlo (NL)
(74) Representative: Arnold & Siedsma

(57) **Abstract**

The invention relates to a method, extraction system, and use of said system for extracting protein from leaf juice. The method comprises the steps of:
- providing leaf juice to a micro membrane filter;
- in a first separating step separating the leaf juice into protein paste and whey comprising rubisco protein;
- drying the protein paste, wherein the protein paste is dried to a protein paste comprising at least 50 wt.% of proteins; and
- decolouring the dried protein paste comprising a second separating step of separating the protein paste.

## Description

The present invention relates to a method, extraction system, and use of said system for extracting protein from leaf juice. The present invention further relates to a composition comprising the protein obtained by said method. This enables obtaining the proteins from leaf juice by separation.

It is known that a high demand of proteins is represented by humans and animals, and that this demand is growing ever since. Currently, the majority of plant originated proteins come from beans, in particular soy beans.

A disadvantage of beans, in particular soy beans, is that the production of said beans is limited to the available farm land and therefore the price per bean is increasing.

Therefore, there is a need for a method that may harvest proteins from other plant sources and/or enables an efficient and effective use of the harvested proteins.

An objective of the present invention is to obviate or at least reduce the aforementioned problem and provide a method which efficiently and effectively harvests proteins from plants and/or plant parts.

This objective is achieved with a method for extracting protein from leaf juice comprising the steps of:
- providing leaf juice to a micro membrane filter;
- in a first separating step separating the leaf juice into protein paste and whey comprising rubisco protein;
- drying the protein paste, wherein the protein paste may be dried to a protein paste comprising at least 35 wt.% of proteins; and
- decolouring the dried protein paste comprising a second separating step of separating the protein paste.

Leaves, such as grass, contain a high fibre content and also has a high nutritional value for ruminants. The fibres can however not optimally be metabolized by humans. The fibres comprising of proteins, could however serve a wide range of purposes than animal feed, and may also include food for human consumption like snack products, soft drinks, food additives, food supplements, and/or meat alternatives/replacements. Leaf plants have the ability to grow in many environments and can withstand extreme weather conditions. These plants can therefore be grown very low-maintenance and leaves therefore seems to be a very attractive protein source.

Conventional methods of obtaining protein from leaf comprises an extrusion step wherein the leaf juice is squeezed from the leaf plants. Subsequently the protein in the leaf juice can be coagulated to enable the filtration of the proteins from the leaf juice. This conventional method is capable of extracting about 30%, preferably about 40%, more preferably about 50% of the proteins initially present in the leaf. The proteins extracted by this method also have a green colour since with this method it is not possible to remove all of the chlorophyll from the extracted protein.

The method according to the invention starts with the step of providing leaf juice to a micro membrane filter. Followed by a first separating the step of separating the leaf juice into protein paste and whey comprising dissolved rubisco (ribulose-1,5-bifosfaat carboxylase oxygenase) protein.

It will be understood that the micro filter also may be a nano filter. The micro filter and/or nano filter may be a membrane, a glass filter, a sand filter, a paper filter, and/or any other suitable filter.

An advantage of the first separating step with the micro membrane filter is that the protein paste fraction is concentrated. Therefore, further processing is more efficient and effective. Furthermore, the first separating step provides at least two valuable fractions, wherein the first fraction comprises the protein paste and the second fraction comprises whey, wherein the whey comprises rubisco protein.

In a preferred embodiment, the micro membrane filter comprises a membrane band filter having an input position and an output position, and wherein the step of providing the leaf juice to the micro membrane filter comprises providing the leaf juice to the input position of the micro membrane filter.

An advantage of the membrane band filter is that a continuous separation of the protein paste and whey may be achieved.

In a preferred embodiment, the membrane band filter is provided at an angle to a substantially horizontal reference line, preferably a line on a ground surface, wherein said angle is between 1° and 45°.

It is noted that the horizontal reference line is understood to also encompass a horizontal surface or a horizontal plane.

Providing the membrane band filter at an angle enables the whey and/or (unseparated) leave juice to flow at least partially downward and therefore dilute the provided leave juice. Furthermore, it was found that providing the membrane band filter at an angle enables an evenly distribution of the protein paste over the membrane band filter.

In an embodiment, the band input position, when viewed in a direction substantially vertically upward from the horizontal reference line, is positioned at a lower position than the band output position.

In this embodiment, the leave juice is provided to the lowest point of the band membrane filter. It is noted that the lowest part of the band membrane filter (endless membrane filter) refers to the input position, which is (when viewed in an upward or vertical direction) positioned at a lower point to the output position of the band membrane filter. This means that the leave juice, during transportation in a transport direction is transported in an upward direction. This enables the whey and/or (unseparated) leave juice to flow at least partially downward, which improves separation.

The first separating step is followed by the step of drying the protein paste, wherein the protein paste is dried to a protein paste comprising at least 35 wt.% of proteins. Preferably, the protein paste is dried to a protein paste comprising a protein content in the range of 35 wt.% to 70 wt.%, more preferably the protein paste comprises a protein content in the range of 35 wt.% to 60 wt.%.

Further drying the protein paste enables more efficient and effective further processing of the protein paste. Preferably, the solvent content is reduced to a minimum such that further processing of the at least two fractions, in particular the first fraction, is energy efficient. It will be understood that the minimum is part of an optimum which results in an energy efficient process.

In a preferred embodiment the protein paste is dried to a protein paste comprising at most 50 wt.% of water. Preferably, the protein paste comprises water in a range of 10 wt.% to 50 wt.%, more preferably comprises water in a range of 15 wt.% to 35 wt.%.

In a preferred embodiment, the step of drying of the protein paste may comprise the step of drying using a wavelength of 750 nm to 1 m, preferably using a wavelength of 750 nm to 1 mm and/or 1 mm to 1 m.

It is noted that a wavelength of 750 nm to 1 m refers to infrared radiation and 1 mm to 1 m refers to microwave radiation. Drying the protein paste by infrared radiation and/or microwave radiation enables an efficient and effective drying of the protein paste.

The step of drying the protein paste is followed by the step of decolouring the dried protein paste comprising a second separating step of separating the protein paste.

Therefore, the method according to the invention provides an efficient and effective harvesting of proteins from leaf.

An advantage of decolouring the protein paste is that the (un)desired colour (green, yellow, brown, orange) is removed from the protein paste. As a result, the protein paste may become suitable for human consumption. This enables that leaf proteins may become a part of the human diet in the (near) future. A further advantage is that the colour may be used and/or sold separately. This enables efficient and effective use of the leaf juice.

Yet another advantage of the decolouring the protein paste is that the stream comprising the protein paste is concentrated up to a comprising a protein content of at least 60 wt.%, preferably at least 70 wt.%, more preferably at least 75 wt.%, most preferably at least 80 wt.%.

The method according to the invention enables to provide proteins on a large scale, wherein the growing of leaves is the limiting factor. For example, the same area of farm land provides at least 50% more proteins, preferably at least 100% more proteins, more preferably at least 200% more proteins, when used for harvesting proteins compared to the use of feeding life-stock. The proteins consumed by the life-stock may be used as energy source and/or to grow weight. Thus, proteins harvested from farm-land are an efficient and effective source for proteins.

A further advantage of the decolouring step is that the smell is at least reduced, preferably removed, from the separated proteins. Providing an odour free protein is desired to be able to use said protein for human consumption. Furthermore, the step of decolouring the dried protein paste provides a decoloured protein paste comprising a protein content in the range of 50 wt.% to 90 wt.%, preferably the protein paste comprises a protein content in the range of 60 wt.% to 90 wt.%.

Proteins obtained from leaves may in the near future replace or reduce the required amount of proteins obtained from life-stock. It is known that life-stock has a severe impact on the carbon footprint. Therefore, proteins harvested from leaves by the method according to the invention reduce the carbon footprint of proteins compared to proteins harvested from life-stock.

The method according to the invention enables to separate leaf juice and provide valuable fractions of substantially pure compounds. Therefore, the method according to the invention increases the value of leaves and potential of for example grass land.

In a presently preferred embodiment according to the invention, the leaf juice is a leaf juice from green leaves, preferably wherein the leaf juice is grass juice.

It will be understood that the invention is not limited to leaf juice and that juices from green leaves, may also be used. In addition, said leaf juice may be grass juice.

It was found that the method according to the invention harvested even more efficient and effective when juice from green leaves, preferably wherein the leaf juice is grass juice. Therefore, where in this patent application leaf juice is mentioned, this may be replaced with leaf juice from green leaves and/or grass juice.

An advantage of leaf juice from grass, such as grass juice, is that grass is readily available and efficient to harvest. In particular, grass may be harvested more efficient and effective compared to (green) leaves from trees and/or shrubs and/or bushes.

Another advantage of grass juice is that grass may easily grow and requires low maintenance. As a result the price per kilo harvested proteins is compatible with proteins harvested from sources such as milk and/or life stock.

In a presently preferred embodiment according to the invention the protein paste comprises one or selected from the group of chlorophyll, lutein, xanthophyll, paraffin, fatty acid, vitamin, resin, denatured protein, and wherein the decolouring step comprises separating chlorophyll, lutein, xanthophyll, paraffin, fatty acid, vitamin, resin, and/or denatured protein.

Preferably, the protein paste comprises at least chlorophyll, lutein, and denatured protein. The method according to the invention separates a hydrophobic fraction (the chlorophyll and lutein) from the denatured protein. The mixture of chlorophyll and lutein may be further separated into chlorophyll and lutein.

For example, when hemp is used the method according to the invention may be used to harvest protein paste and a separate fraction comprising cannabidiol.

The method according to the invention enables separating the chlorophyll, lutein, xanthophyll, paraffin, fatty acid, vitamin, resin, and/or denatured protein. An advantage of said separation is that the protein paste comprising chlorophyll, lutein, xanthophyll, paraffin, fatty acid, vitamin, resin, and/or denatured protein is separated obtaining individual compounds. The individual compounds, chlorophyll, lutein, xanthophyll, paraffin, fatty acid, vitamin, resin, and denatured protein, are more valuable compared to the mixture. Furthermore, having the individual compound in hand, it is possible to provide a divined mixture of chlorophyll, lutein, xanthophyll, paraffin, fatty acid, vitamin, resin, and/or denatured protein. Alternatively, the chlorophyll, lutein, xanthophyll, paraffin, fatty acid, vitamin, resin, and/or denatured protein may be mixed with other compounds such as additional vitamins, supplement carriers, spices, and the like. For example, the denatured protein may be used in meat replacement, chlorophyll may be used as food additive and/or colour agent, and lutein may be used as food additive and/or colour agent.

In a further presently preferred embodiment according to the invention, the second separating step of separating the protein paste comprises the step of extracting chlorophyll, lutein, and/or denatured protein from the protein paste. It will be understood that the step of extracting chlorophyll, lutein, and/or denatured protein from the protein paste refers to the extraction of chlorophyll, lutein, and/or denatured protein from the protein paste.

It was found that the second step of separating the protein paste comprising the step of extracting provided chlorophyll, lutein, and/or denatured protein from the protein paste in a good yield and purity. As a result, the chlorophyll, lutein, and/or denatured protein may be used in a desired application without further purification. From practice it is known that purification is usually the step which is most time consuming, and may reduce the yield dramatically.

Therefore, the method according to the invention provides an efficient and effective separation of the valuable compounds.

In a further presently preferred embodiment according to then invention, the extraction may be performed with one or more solvents selected from the group of water, methanol, ethanol, propanol, butanol, 2-ethoxyethanol, 2-methoxyethanol, pentane, hexane, heptane, super critical carbon dioxide (scCO₂). Preferably, the extraction may be performed with one or more solvents selected from the group of pentane, hexane, heptane.

It will be understood that 2-ethoxyethanol is also known as cellosolve.

Providing the extraction according to the invention with one or more solvents selected from the group of water, methanol, ethanol, propanol, butanol, 2-ethoxyethanol, 2-methoxyethanol, super critical carbon dioxide, and/or one or more solvents selected from the group of pentane, hexane, heptane, enables an efficient and effective extraction of the chlorophyll, lutein, and/or denatured protein. Furthermore, the protein paste composition may influence the choice of solvent. For example, if a relative high amount of chlorophyll is present in the protein paste a relative high amount of for example 2-ethoxyethanol may be used. Preferably, a protein paste comprising a relatively high amount of chlorophyll may separated by a soxhlet extraction. An advantage of said extraction is that a lower amount of for example 2-ethoxyethanol has to be used compared to other extraction techniques.

In a further presently preferred embodiment according to the invention, the extraction may be performed by super critical carbon dioxide and a co-solvent and comprises the steps of:
- performing the extraction in a low pressure environment to obtain chlorophyll; and
- performing the extraction in a high pressure environment to obtain lutein.

The co-solvent may be one or more selected from the group of water, methanol, ethanol, propanol, butanol, 2-ethoxyethanol, 2-methoxyethanol and/or may be one or more co-solvent selected from the group of pentane, hexane, heptane. It was found that said co-solvent enables the extraction with super critical carbon dioxide and provides an efficient and effective extraction and separation of chlorophyll and/or lutein. Furthermore, it was found that xanthophyll, paraffin, fatty acid, vitamin, and/or resin may be effectively extracted with an extraction by super critical carbon dioxide and a co-solvent.

Preferably, the extraction in a low pressure environment is performed before the extraction in a high pressure environment.

Separating the chlorophyll and/or lutein increases the value of the individual compounds significantly. Therefore, the method according to the invention increases the value of leaf and for example grass lands.

The pressure at which the extraction in a low pressure environment is performed to obtain the chlorophyll is in the range of 1 bar to 40 bar, preferably in the range of 1 bar to 30 bar, more preferably in the range of 2 bar to 20 bar, most preferably in the range of 5 bar to 10 bar.

The pressure at which the extraction in a high pressure environment is performed to obtain the lutein is in the range of 40 bar to 100 bar, preferably in the range of 45 bar to 90 bar, more preferably in the range of 50 bar to 80 bar, most preferably in the range of 60 bar to 70 bar.

It was found that the above mentioned pressures provided efficient and effective extraction at low and high pressure and enable to obtain chlorophyll, lutein, and/or denatured protein in a substantially pure manner.

In a further presently preferred embodiment according to the invention, the method further comprises the step of regenerating the solvent.

An advantage of the step of regenerating the solvent is that the use of fresh solvent is reduced. As a result, the use of resources is reduced and the transport of hazardous chemicals is reduced. Furthermore, the impact on rare sources is limited. For example, the limited availability of fresh water. Also, the regenerating of the solvent provides a(n) (almost) solvent-free flow that can be used for other purposes more easily. Furthermore, the method according to the invention enables a circular economy.

In a further presently preferred embodiment according to the invention, the protein paste may be dried to a protein paste comprising at least 60 wt.% of proteins, preferably dried to a protein paste comprising at least 65 wt.% of proteins. Preferably the protein content is in the range of 65 wt.% and 90 wt.% of the weight of the total protein paste.

It was found that the second separating step was even more efficient and effective when the protein paste is dried to a protein paste comprising at least 60 wt.% of proteins, preferably dried to a protein paste comprising at least 65 wt.% of proteins. An advantage of said protein paste is that a higher throughput is achieved and therefore less time to process the leaf juice is required.

Experiments showed that the protein content in the protein paste may be increased from 40 wt.% to at least 80 wt.% when the protein paste was decolored.

In a further presently preferred embodiment according to the invention, the protein paste may be dried to a protein paste comprising at most 90 wt.% of proteins, preferably dried to a protein paste comprising at most 80 wt.% of proteins, more preferably dried to a protein paste comprising at most 75 wt.% of proteins.

Experiments showed that a protein paste comprising more than 90 wt.% of proteins did not provide the desired separation of the chlorophyll, lutein, and/or denatured protein.

In a further presently preferred embodiment according to the invention, the micro membrane filter may be a tubular membrane filter.

It was found that a tubular membrane filter provided an efficient and effective micro filtration.

In a further presently preferred embodiment according to the invention, the method further comprises the step of injecting water during the micro membrane filtering to wash salts and/or soluble organic compounds from the protein paste.

Injecting water during the micro membrane filtering enabled to wash salts and/or soluble organic compounds from the protein paste. Said washing resulted in a more pure fraction of chlorophyll, lutein, and/or denatured protein, and prevents Maillard reactions during drying.

In a further presently preferred embodiment according to the invention, the method further comprises the steps of:
- providing the whey comprising rubisco protein to an ultra membrane filter; and
- separating rubisco protein from the whey comprising the rubisco protein.

Preferably, the method further comprises the step of combining the decoloured protein with the rubisco protein.

It will be understood that the whey fraction comprises rubisco protein, wherein the separation of the whey fraction provides rubisco protein and rest whey also referred to as a whey fraction without or with a low concentration of rubisco protein.

It was found that the whey comprising rubisco protein may be further separated in an efficient and effective manner, wherein the whey and rubisco protein are separated. An advantage of this separation is that the valuable rubisco protein is harvested from the initial leaf juice. Furthermore, the whey may be provided to the farm-land as fertiliser. In an alternative embodiment, the whey may be processed further, to harvest other valuable compounds from the whey.

Performing the method according to the invention on near or at the location the leaf is harvested, the whey may be even more efficiently and effectively used as fertiliser. Furthermore, the transport costs are reduced.

Another advantage of the separated rubisco protein is that it may be mixed with the denatured protein. This results in a pre-determined mixture of rubisco protein and denatured protein.

In a further presently preferred embodiment according to the invention, the method comprises the step of cooling the leaf juice provided to the micro membrane filter, wherein the cooling may be performed in the range of 0 °C and 25 °C, preferably in the range of 5 °C and 15 °C, more preferably in the range of 10 °C and 12 °C.

Cooling the leaf juice has an advantage that the functionality of the rubisco protein may substantially be secured. As a result, the rubisco protein fraction keeps its value.

In a further presently preferred embodiment according to the invention, the leaf juice may be obtained from extrusion of leaf and/or the leaf juice may be treated by coagulation. Preferably, the the leaf juice may be a food-grade leaf juice.

Coagulation of the leaf juice before extracting protein from the leaf juice results in a severe reduction of the volume, due to the fact that hydrophobic compounds such as colouring agent, resin, such as cannabidiol, vitamins, and the like are present in the protein paste. An advantage of said coagulation is that the volume provided to the second separating step is 10 to 100 times smaller. Therefore, the equipment to perform the method according to the invention may be smaller and operating costs may be reduced.

It will be understood that the above mentioned colouring agent may be chlorophyll and/or lutein.

Processing a food-grade leaf juice by the method according to the invention enables the method according to the invention to provide food-grade proteins, wherein food-grade proteins relate to proteins suitable for consumption by humans. The food-grade proteins represent a higher economical value compared to non food-grade proteins.

Additionally, the food-grade proteins may be used in food products such as meat replacements, food supplements, food additives, and the like. Therefore, the method according to the invention wherein the leaf juice may be a food-grade leaf juice obviates or at least reduces the world wide shortage of food.

The invention also relates to an extraction system for extracting proteins from leaf juice comprising at least one filter membrane, a drying device, an extractor, to perform the method according to the invention.

The extraction system for extracting proteins from leaf juice provides similar effects and advantages as those described for the method for extracting protein from leaf juice.

Another advantage of the extraction system according to the invention is that it may be used near or at the site the leaf is harvested. This enables to reduce transport of the harvested leaf and/or leaf juice and may provide the rest products, such as whey, to the farm-land as fertilizer.

Furthermore, the extraction system enables to efficiently and effectively separate the leaf juice and provides valuable fractions of different compounds, such as denatured protein, chlorophyll, lutein, rubisco protein, and whey.

In a presently preferred embodiment according to the invention, the at least one filter membrane is a tubular membrane.

It was found that a tubular membrane and/or anti-fouling membrane (FMX membrane) provided efficient and effective separation of the protein paste and whey comprising rubisco protein.

In a presently preferred embodiment according to the invention, the extraction system further comprises a water injecting system. Preferably, the extraction system according to the invention further comprises an extruder.

The invention also relates to a use of the extraction system for extracting proteins from leaf juice according to the invention, for performing the method for extracting proteins from leaf juice according to the invention.

The use of the extractions system or extracting proteins from leaf juice according to the invention, for performing the method for extracting proteins from leaf juice according to the invention provides similar effects and advantages as those described for the method for extracting protein from leaf juice, and extraction system for extracting proteins from leaf juice.

The invention also relates to a use of the extraction system for extracting proteins from leaf juice according to the invention and/or the method for extracting proteins from leaf juice according to the invention for obtaining a composition comprising at least 80 wt.% protein of the protein initially present in the leaf juice.

The use of the extractions system or extracting proteins from leaf juice according to the invention and/or the method for extracting proteins from leaf juice according to the invention for obtaining a composition comprising at least 80 wt.% protein of the protein initially present in the leaf juice provides similar effects and advantages as those described for the method for extracting protein from leaf juice, extraction system for extracting proteins from leaf juice, and use of the extraction system for extraction protein from leaf juice according to the invention.

The invention also relates to a composition comprising decoloured protein and rubisco protein obtained by the method according to the invention.

The composition according to the invention provides similar effects and advantages as those described for the method for extracting protein from leaf juice, extraction system for extracting proteins from leaf juice, and use of the extraction system for extraction protein from leaf juice according to the invention.

Further advantages, features and details of the invention are elucidated on the basis of preferred embodiments thereof, wherein reference is made to the accompanying drawings, in which:
- Figure 1 shows a schematic overview of an example of the method for extracting protein from leaf juice; and
- Figure 2 shows a schematic overview of an example of the second separating step in an embodiment of the invention comprising super critical carbon dioxide.

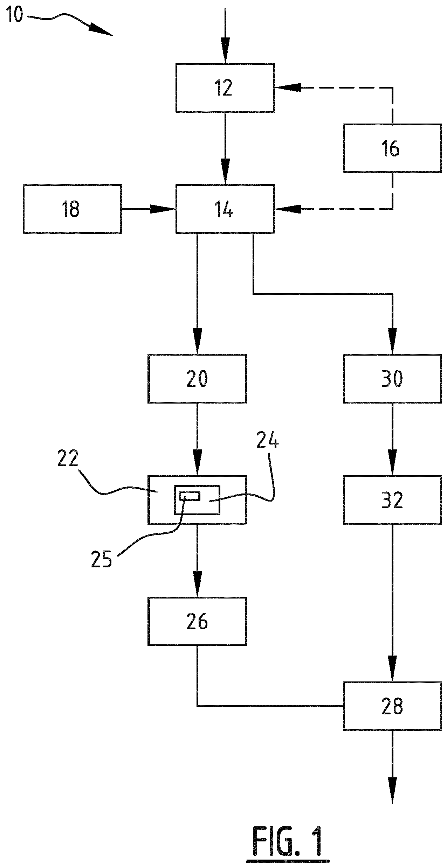

Method 10 (Figure 1) shows an example of the method for extracting protein from leaf juice according to the invention that follows a sequence of different steps.

In the illustrated example method 10 starts with step 12 of providing leaf juice to a micro membrane filter. The leaf juice comprises proteins which may be harvested by the method according to the invention and further described by the illustrated example of method 10. Step 12 is followed by first separating step 14 separating the leaf juice into protein paste and whey comprising rubisco protein. Separating these two streams enables further processing of the obtained fractions.

In an alternative embodiment of the invention, step 16 of cooling the leaf juice provided to the micro membrane filter is performed before step 12 of providing leaf juice to a micro membrane filter. The cooling of the leaf juice may extend until step 14 is performed. Therefore, step 16 may extend/last until step 14 is performed.

In another alternative embodiment of the invention, step 18 of injecting water during the micro membrane filtering to wash salts from the protein paste is performed during first separating step 14.

First separating step 14 of the illustrated example of method 10 may be followed by step 20 of drying the protein paste, wherein the protein paste is dried to a protein paste comprising at least 50 wt.% of proteins. It was found that a protein paste comprising at least 50 wt.% of proteins provided an efficient and effective decolouring of the dried protein paste in step 22 of decolouring the dried protein paste.

Step 22 comprises second separating step 24 of separating the protein paste, wherein the protein paste comprising chlorophyll, lutein, and denatured protein is separated. Second separating step 24 further comprises step 25 of extracting chlorophyll, lutein, and/or denatured protein from the protein paste. Said extraction may be performed comprising a solvent, wherein the solvent may be one or more solvents selected from the group of water, methanol, ethanol, propanol, butanol, 2-ethoxyethanol, 2-methoxyethanol, super critical carbon dioxide and/or may be one or more solvents selected from the group of pentane, hexane, heptane.

Step 22 is followed by step 26 of regenerating the solvent.

Furthermore, first separating step 14 of the illustrated example of method 10 may be followed by step 30 of providing the whey comprising rubisco protein to an ultra membrane filter and step 32 of separating rubisco protein from the whey comprising the rubisco protein.

The decoloured protein obtained by step 26 and/or step 22 may be combined with the rubisco protein obtained by step 32 in step 28 of combining the decoloured protein with the rubisco protein.

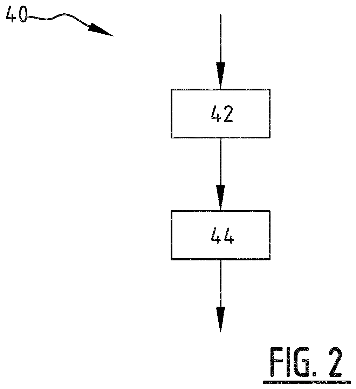

Extracting step 40 (Figure 2) shows an example of the method for extracting chlorophyll, lutein, and/or denatured protein from the protein paste, wherein the extraction is performed by super critical carbon dioxide and a co-solvent according to the present invention follows a sequence of different steps.

In the illustrated example extracting step 40 may be a replacement of step 25 of Figure 1.

Extracting step 40 starts with step 42 of performing the extraction in a low pressure environment to obtain chlorophyll and is followed by step 44 of performing the extraction in a high pressure environment to obtain lutein.

The present invention is by no means limited to the above described preferred embodiments and/or experiments thereof. The rights sought are defined by the following claims within the scope of which many modifications can be envisaged.

## Claims

1. Method for extracting protein from leaf juice comprising the steps of:
- providing leaf juice to a micro membrane filter;
- in a first separating step separating the leaf juice into protein paste and whey comprising rubisco protein;
- drying the protein paste, wherein the protein paste is dried to a protein paste comprising at least 35 wt.% of proteins; and
- decolouring the dried protein paste comprising a second separating step of separating the protein paste.

2. Method according to claim 1, wherein the leaf juice is a leaf juice from green leaves, preferably wherein the leaf juice is grass juice and/or wherein the protein paste comprises one or more selected from the group of chlorophyll, lutein, xanthophyll, paraffin, fatty acid, vitamin, resin, denatured protein, and wherein the decolouring step comprises separating chlorophyll, lutein, xanthophyll, paraffin, fatty acid, vitamin, resin, and/or denatured protein.

3. Method according to claim 2, wherein the second separating step of separating the protein paste comprises the step of extracting chlorophyll, lutein, and/or denatured protein from the protein paste, preferably wherein the extraction is performed with one or more solvents selected from the group of water, methanol, ethanol, propanol, butanol, 2-ethoxyethanol, 2-methoxyethanol, super critical carbon dioxide and/or wherein the extraction is preferably performed with one or more solvents selected from the group of pentane, hexane, heptane.

4. Method according to claim 3, wherein the extraction is performed by super critical carbon dioxide and a co-solvent and comprises the steps of:
- performing the extraction in a low pressure environment to obtain chlorophyll; and
- performing the extraction in a high pressure environment to obtain lutein.

5. Method according claim 3 or 4, further comprising the step of regenerating the solvent.

6. Method according to any one of the claims 1 to 5, wherein the protein paste is dried to a protein paste comprising at least 60 wt.% of proteins, preferably dried to a protein paste comprising at least 65 wt.% of proteins and/or wherein the protein paste is dried to a protein paste comprising at most 90 wt.% of proteins, preferably dried to a protein paste comprising at most 80 wt.% of proteins, more preferably dried to a protein paste comprising at most 75 wt.% of proteins.

7. Method according to any one of the claims 1 to 6, wherein the micro membrane filter is a tubular membrane filter.

8. Method according to any one of claims 1 to 7, further comprising the step of injecting water during the micro membrane filtering to wash salts and/or soluble organic compounds from the protein paste.

9. Method according to any one of the claims 1 to 8, further comprising the steps of:
- providing the whey comprising rubisco protein to an ultra membrane filter; and
- separating rubisco protein from the whey comprising the rubisco protein,
preferably further comprising the step of combining the decoloured protein with the rubisco protein.

10. Method according to any one of the claims 1 to 9, further comprising the step of cooling the leaf juice provided to the micro membrane filter, wherein the cooling is performed in the range of 0 °C and 25 °C, preferably in the range of 5 °C and 15 °C, more preferably in the range of 10 °C and 12 °C and/or wherein the leaf juice is obtained from extrusion of leaf and/or the leaf juice is treated by coagulation and/or wherein the the leaf juice is a food-grade leaf juice.

11. Extraction system for extracting proteins from leaf juice comprising at least one filter membrane, a drying device, an extractor, to perform the method of any one the preceding claims.

12. Extraction system according to claim 11, wherein the at least one filter membrane is a tubular membrane.

13. Extraction system according to claim 11 or 12, further comprising a water injecting system and/or further comprising an extruder.

14. Use of the extraction system for extracting proteins from leaf juice according to any one of the claims 11 to 13 and/or the method for extracting proteins from leaf juice according to any one of the claims 1 to 10 for obtaining a composition comprising at least 80 wt.% protein of the protein initially present in the leaf juice.

15. Composition comprising decoloured protein and rubisco protein obtained by the method for extracting proteins from leaf juice according to claim 9, wherein the method comprises the step of combining the decoloured protein with the rubisco protein.
